# EUROPÄISCHE PATENTANMELDUNG

(11) **EP 2 620 566 A2**
(43) Veröffentlichungstag der Anmeldung: **31.07.2013**
(21) Anmeldenummer: 13152675.8
(22) Anmeldetag: 25.01.2013
(51) Int. Cl.: E04B 1/68

(54) **Dichtband**

(30) Priorität: 27.01.2012 DE 202012000883 U
(71) Anmelder: Tremco illbruck Produktion GmbH, 92439 Bodenwöhr (DE)
(72) Erfinder: Andexer, Dennis, 83043 Bad Aibling (DE); Komma, Markus, 93133 Burglengenfeld (DE)
(74) Vertreter: Lippert, Stachow & Partner

(57) **Zusammenfassung**

Die Erfindung betrifft ein Fugendichtband mit einem Korpus aus einem Schaumstoffmaterial, welches mit einem Imprägnat zur verzögerten Rückstellung imprägniert ist. Erfindungsgemäß besteht das Imprägnat zumindest teilweise aus einem nachwachsenden Rohstoff einschließlich dessen Derivaten.

## Beschreibung

Die Erfindung betrifft ein Fugendichtband mit einem Korpus aus einem Schaumstoffmaterial, welches mit einem Imprägnat zur verzögerten Rückstellung imprägniert ist.

Gattungsgemäße Dichtbänder werden insbesondere zum Abdichten von Fugen zwischen Rahmenbauteilen wie Fenster- und Türprofilen mit dem angrenzenden Mauerwerk oder zur Abdichtung von Fugen zwischen benachbarten Bauteilen eingesetzt. Das Dichtband ist hierbei zur verzögerten Rückstellung imprägniert, d.h. nach einer Volumenkompression erfolgt eine nur vergleichsweise langsame Rückstellung in den Ausgangszustand. Hierdurch ist das Dichtband, gegebenenfalls nach dessen Montage an einem Bauteil, leichter in eine Mauerwerksöffnung wie eine Fuge einbringbar, indem das Dichtband vor dessen Einbringung, ggf. bereits bei dessen Herstellung, bzw. komprimiert wird und dann aufgrund der verzögerten Rückstellung ausreichend Zeit für die bestimmungsgemäße Platzierung des Dichtbandes in der Fuge verbleibt.

Derartige Dichtbänder müssen eine Vielzahl unterschiedlicher Anforderungen erfüllen. So soll durch die Imprägnierung die Rückstellung eine ausreichende zeitliche Verzögerung erfahren, d. h. die Rückstellung soll in einem gewissen Zeitfenster liegend weder zu schnell noch zu langsam sein, so dass einerseits eine sachgerechte Handhabung des Dichtbandes ermöglicht ist, andererseits innerhalb eines gegebenen Zeitraumes auch eine vollständige Rückstellung erfolgt, um die jeweilige Fuge abzudichten. Die Rückstellung soll bei unterschiedlichen Umgebungstemperaturen in einem handhabbaren Zeitfenster erfolgen, beispielsweise sowohl bei +25°C oder bei 0°C, also beispielsweise bei verschiedenen Jahreszeiten. Weiterhin soll die Imprägnierung UV-beständig sein. Die Imprägnierung soll auch wasserabweisend sein, um ein Eindringen von Feuchtigkeit zu verhindern oder zumindest zu erschweren. Ferner soll die Imprägnierung auch bei erhöhten Außentemperaturen einsetzbar sein, also nicht bei Komprimierung des Dichtbandes bei dessen Handhabung oder aber über einen längeren Zeitraum in der Fuge eingesetzt "ausbluten", so dass also das Imprägnat unerwünschterweise sich an den freien Seitenflächen des Dichtbandes abscheidet bzw. anreichert. Weiterhin soll das Imprägnat eine nur vergleichsweise geringe Diffusion oder Migration in angrenzende Bauwerks- oder Bauteilbereiche aufweisen, insbesondere dann, wenn die Bauwerks-Bauteilbereiche aus porösen Materialien bestehen wie beispielsweise Kalksandstein, Naturstein oder auch Bimsstein. Ferner muss das Imprägnat mit verschiedenen Materialien wie Holz, Kunststoff, Metall oder dergleichen, aus welchen beispielsweise Fenster, Türen oder andere Bauteile gefertigt werden, kompatibel sein, also diese nicht unerwünscht hinsichtlich ihrer optischen und/oder mechanischen Eigenschaften negativ beeinflussen, was auch bereits für lediglich oberflächliche Beeinträchtigungen gilt.

Um dieses Anforderungsprofil zu erfüllen haben sich verschiedentlich Imprägniermittel auf Acrylatbasis bewährt.

Weiterhin soll das Dichtungsband verschiedene Anforderungen im Hinblick auf die Luftdurchlässigkeit und/oder Wasserdampfdurchlässigkeit (Wasserdampfdiffusionswiderstand) erfüllen. Hierzu müssen die Dichtungsbänder teilweise eine recht geringe Luftdurchlässigkeit von beispielsweise ≤ 150-200 l/ms² (gemessen nach DIN EN ISO 9237, Prüffläche 100cm2, Probendicke 10mm, Unterdruck 0,5 mbar) erfüllen. Das jeweilige Imprägnat muss daher auch zur homogenen Imprägnierung von derartigen Schaumstoffkörpern geeignet sein. Weiterhin müssen die Schaumstoffmaterialien des Dichtungsbandes eine hohe Alterungsbeständigkeit und Lebensdauer sowie auch UV-Beständigkeit aufweisen. Daher bestehen derartige Dichtungsbänder oftmals aus Polyurethan, was sich hierfür besonders bewährt hat.

Ferner umfassen derartige Dichtbänder Füllstoffe oder weitere Hilfsmittel, um andere Eigenschaften wie die Brandschutzeigenschaften einzustellen. Hierzu können ggf. auch vielfältige Brandschutzmittel eingesetzt werden, z.B. Intumeszenzmittel, Phosphonate bzw. Phosphorsäureester, Hydroxide wie Aluminiumhydroxid, bei erhöhter Temperatur verglasende Silikate usw.

Derartige Dichtbänder stellen also komplexe Systeme mit aufeinander abgestimmten Komponenten dar.

Darüber hinaus sollen Dichtungsbänder jedoch auch verstärkt ökologische Anforderungen erfüllen. Hierbei ist bei bisherigen Dichtungsbändern nachteilig, dass diese bei deren Herstellung einen vergleichsweise hohen Energie- sowie auch Ressourcenaufwand bedingen, da diese praktisch vollständig aus synthetischen Materialien bzw. Erdölchemieprodukten bestehen (bis auf gegebenenfalls anorganische Füllstoffe des Imprägnats). Dies bedingt jedoch trotz der vorteilhaften Abdichtungswirkung derartiger Dichtungsbänder in bauphysikalischer Hinsicht eine zu verbessernde Ökobilanz derselben.

Der Erfindung liegt daher die Aufgabe zugrunde, ein gattungsgemäßes Dichtungsband zu schaffen, welches eine verbesserte Ökobilanz aufweist, ohne dessen Funktionalität im Übrigen aber wesentlich zu beeinflussen.

Die Erfindung wird durch ein Dichtungsband nach Anspruch 1 gelöst, bei welchem erfindungsgemäß das Imprägnat zumindest teilweise aus einem nachwachsenden Rohstoff einschließlich dessen Derivaten besteht. Im Zuge der Erfindung wurde überraschenderweise festgestellt, dass hierdurch die Ökobilanz derartiger Dichtbänder verbessert und gleichzeitig das eingangs beschriebene komplexe Anforderungsprofil erfüllt werden kann. Dies gilt insbesondere auch in Hinblick auf das Rückstellverhalten, insbesondere auf das Rückstellverhalten bei verschiedenen Temperaturen, beispielsweise bei Raumtemperatur (20°C) oder bei niedrigeren Temperaturen wie z.B. 5-10°C und/oder bei höheren Temperaturen, z.B. bei 30°C oder bei 35-40°C.

Das Imprägnat ist vorzugsweise ein solches auf Wasserbasis und umfasst neben dem die kontinuierliche Phase bildenden Bestandteil Wasser ein Haftmittel und gegebenenfalls weitere Komponenten wie Füllstoffe, Hilfsmittel usw. auf. Das Haftmittel besteht hierbei aus einer oder mehreren Komponenten, welche eine gewisse "Klebrigkeit", also Klebkraft aufweisen (des getrockneten Haftmittelfilms) und bei einer Komprimierung des Dichtbandes an gegenüberliegenden Porenwänden der Schaumkörperstruktur anhaften, um eine verzögerte Rückstellung zu bewirken. Hierbei ist zum Einen eine entsprechende Adhäsion an den Porenwänden und den Stegen und zum Anderen eine geeignete Kohäsion des Haftmittels als solchem erforderlich. Im Zuge der Erfindung hat es sich herausgestellt, dass das Haftmittel zumindest eine oder mehrere Komponenten aus einem nachwachsenden Rohstoff einschließlich dessen Derivaten enthalten kann oder aus diesem/diesen besteht. Hiervon erfindungsgemäß mit eingeschlossen sind Haftmittel, welche die Klebkraft anderer Haftmittel verstärken oder ggf. das Haftmittel selber im Wesentlichen bilden. Zusätzlich kann das Haftmittel gegebenenfalls weitere Komponenten aus nicht nachwachsenden Rohstoffen, beispielsweise synthetische Komponenten, zumeist hergestellt aus Erdölprodukten, enthalten, welches ebenfalls Haftmittel sind.

Als "Komponenten aus nachwachsenden Rohstoffen" seien solche Komponenten verstanden, welche unmittelbar aus nachwachsenden Rohstoffen erhalten werden können, also nachwachsende Rohstoffe wie Baumharze unmittelbar oder aber durch Reinigung dieser Rohstoffe erhältliche Komponenten.

Die nachwachsenden Rohstoffe sind im Folgenden zumeist als Haftmittel bzw. Haftmittelkomponenten beschrieben, diese können jeweils allgemein unabhängig von dieser Funktion Bestandteil des Imprägnats sein.

Derivate aus nachwachsenden Rohstoffen sind hierbei Verbindungen, welche durch chemische Umsetzung aus den nachwachsenden Rohstoffen bzw. Komponenten derselben erhalten werden können. Dies kann (vorzugsweise nur) einen oder (vorzugsweise nur) zwei oder ggf. mehrere Umsetzungsschritte umfassen. Hierbei sind Derivate bevorzugt, bei welchen das chemische Grundgerüst der jeweiligen nachwachsenden Komponenten teilweise oder zumindest im Wesentlichen erhalten geblieben ist, vorzugsweise weisen ≥ 25% oder ≥ 50%-75% oder ≥ 85-95% der Kohlenstoffatome des Derivates eine Anordnung und Verknüpfung (chemische Bindung) untereinander auf, welche derjenigen des nachwachsenden Rohstoffs entspricht.

Es unterscheiden sich nachwachsende Rohstoffe von synthetischen Produkten der Erdölchemie durch das ¹²C/¹⁴C- bzw. ¹³C/¹⁴C-Verhältnis, was auch erforderlichenfalls im Rahmen der Erfindung als Unterscheidungsmerkmal dienen kann. So ist es bekannt, dass im Bereich der belebten Natur sich ein Gleichgewicht des ¹²C/¹⁴C - bzw. ¹³C/¹⁴C-Isotopenverhältnisses eingestellt hat (natürliche Isotopenverteilung: ¹²C: 98.9 at.-%, /¹³C: 1,1 at.-%, ¹⁴C: 10⁻⁹at.-%). Verbindungen aus fossilen Rohstoffen (Erdöl, Kohle und dergleichen) weisen aufgrund deren Abtrennung von dem natürlichen Kohlenstoffkreislauf ein unterschiedliches ¹²C/¹⁴C- bzw. ¹³C/¹⁴C-Verhältnis gegenüber Verbindungen aus nachwachsenden Rohstoffen auf, unter Abreicherung des Kohlenstoffisotops mit geringerer Halbwertszerfallszeit (¹⁴C). Vorzugsweise bestehen somit ≥ 10-20 Atom-%, vorzugsweise ≥ 25-50 Atom-% oder ≥ 75-80 Atom-% der Kohlenstoffatome organischer Komponenten des Haftmittels oder des Imprägnats insgesamt aus nachwachsenden Rohstoffen. Die in nachwachsenden Rohstoffen gegenüber anderen Quellen wie fossilen Quellen enthaltenen C-Isotope geringerer Halbwertszeit liegen dann entsprechend in erhöhtem Anteil am Gesamtkohlenstoffgehalt vor.

Vorzugsweise sind die nachwachsenden Rohstoffe jeweils pflanzlichen Ursprungs.

Besonders bevorzugt enthält die erfindungsgemäße Haftmittelkomponente (im Folgenden wird der Begriff "erfindungsgemäß" in Bezug auf das Haftmittel stets im Sinne von Haftmittel bzw. Haftmittelkomponente aus nachwachsenden Rohstoffen, einschließlich dessen Derivaten, verstanden, sofern sich aus dem Zusammenhang sonst nichts anderes ergibt) ein Baumharz und/oder Terpen oder besteht jeweils aus diesen oder einer Kombination derselben oder jeweils deren Derivaten. Besonders bevorzugt ist die erfindungsgemäße Haftmittelkomponente ein Ester, dessen Säurekomponente, insbesondere Carbonsäurekomponente, aus dem nachwachsenden Rohstoff oder einem Derivaten desselben besteht. Alternativ oder zusätzlich kann die Alkoholkomponente des Esters aus einem nachwachsenden Rohstoff, einschließlich dessen Derivaten, bestehen. Besonders bevorzugt bestehen bei einem erfindungsgemäßen Haftmittel sowohl die Säurekomponente als auch die Alkoholkomponente eines Esters aus einem nachwachsenden Rohstoff, oder jeweils unabhängig voneinander Säure- und/oder Alkoholkomponente aus einem Derivat desselben. Es kann der Ester insgesamt Teil des nachwachsenden Rohstoffes (oder dessen Derivats) sein. Alternativ können die Säure- und Alkoholkomponente des Esters auch aus unterschiedlichen Quellen nachwachsender Rohstoffe, einschließlich dessen Derivate, bestehen oder erhalten sein, also beispielsweise aus unterschiedlichen Pflanzenarten, Pflanzengattungen, Pflanzenteilen oder dergleichen.

Eine erfindungsgemäße Haftmittelkomponente auf Basis eines Terpens, welches also in der Zusammensetzung enthalten sein kann, kann ein Di-, Tri- oder Tetraterpen und/oder ein Polyterpen sein, wobei auch die niedermolekulare Komponente des Terpens aus einem nachwachsenden Rohstoff erhalten oder gegebenenfalls ein Derivat desselben darstellen kann. Beispielsweise können aus nachwachsenden Rohstoffen erhaltene Di-, Tri- oder Tetraterpene oligo- oder polymerisiert sein, insbesondere Tetraterpene. Die Oligomere können bis zu 20-30 oder bis zu 10-16 oder bis zu 6-8 Terpen-Monomereneinheiten aufweisen, um eine ausreichende Klebkraft aufzuweisen. Gegebenenfalls können die Terpene auch Sesquiterpene umfassen, die Erfindung kann jedoch auch ohne ausdrücklichen Bezug auf diese verstanden sein.

Besonders bevorzugt weist das Haftmittel eine oder mehrere Komponenten auf, welche Kolophoniumharzsäuren und/oder Kolophoniumharzester umfassen. Kolophoniumharze sind aus Koniferen gewonnene natürliche Harze. Die einsetzbaren Kolophoniumharze umfassen Balsamharz (Destillationsrückstand von Terpentinöl; erfindungsgemäß besonders bevorzugt), Wurzelharz (Extrakt von Koniferen-Wurzelstöcken) und Tallharz (Destillationsrückstand von Tallöl). Das Haftmittel kann insbesondere ein solches auf Grundlage einer oder mehrerer der Harzsäuren Abietinsäure, Neoabietinsäure, Lävopimarsäure, Pimarsäure, Isopimarsäure und Palustrinsäure, insbesondere Abietinsäureester und/oder Pimarsäureester, sein. Die Ester der oben genannten Säuren, insbesondere Abietinsäureester und/ oder Pimarsäureester, sind hierbei ausdrücklich mit umfasst. Es hat sich herausgestellt, dass derartige Harzsäuren und insbesondere Harzsäureester einerseits eine Klebkraft aufweisen, welche in Bezug auf die Erfordernisse an das Rückstellverhalten des Dichtbandes (im Speziellen Rückstellzeitdauer und/oder Temperaturabhängigkeit der Klebkraft) besonders geeignet sind, als auch kompatibel mit anderen Komponenten des Haftmittels, insbesondere polymeren Haftmitteln wie Polyester, Polyacrylaten, Polymetacrylaten, styrolhaltigen Polymeren und dergleichen sind.

Ergänzend sei ausgeführt, dass das Imprägnat bzw. das Haftmittel Terpensäuren und/oder deren Derivate, insbesondere Ester, enthalten kann. Insbesondere kann das Imprägnat bzw. das Haftmittel Terpencarbonsäuren und/oder deren Derivate, insbesondere Ester, enthalten. Der Begriff "Terpensäuren" bzw. "Terpencarbonsäuren" schließt hier jeweils solche mit mehreren Terpeneinheiten (jeweils auch Sesquiterpene) und/oder mehreren Säuregruppen bzw. Carbonsäuregruppen ein. Im speziellen kann das Haftmittel bzw. das Imprägnat mindestens eine oder mehrere Säuren der Di- und/oder Triterpensäuren oder eine oder mehrere Säuren der Di- und/oder Triterpencarbonsäuren enthalten. Die Terpensäuren können 1, 2 oder 3 Säuregruppen enthalten, die Terpencarbonsäuren können 1, 2 oder 3 Carbonsäuregruppen enthalten. Das Imprägnat oder Haftmittel kann zyklische Di- oder Triterpencarbonsäuren enthalten, alternativ oder zusätzlich können auch nicht-zyklische Di- oder Triterpencarbonsäuren enthalten sein, wobei die Di- oder Triterpencarbonsäuren jeweils 1, 2 oder 3 Carbonsäuregruppen enthalten sein können. Im speziellen kann das Imprägnat oder Haftmittel Carbonsäuren aus der Gruppe der bizyklische Diterpencarbonsäuren, trizyklische Diterpencarbonsäuren, bizyklische Triterpencarbonsäuren und bizyklische Triterpencarbonsäuren, insbesondere aus der Gruppe der trizyklische Diterpencarbonsäuren und trizyklische Triterpencarbonsäuren oder aus der Gruppe der trizyklische Diterpencarbonsäuren enthalten. Gegebenenfalls können andere Harzsäuren enthalten sein. Gegebenenfalls kann das Imprägnat oder Haftmittel auch andere Harzsäuren aufweisen wie Agathensäure, Illurinsäure, Podocarpinsäure oder, Elemisäure, Sumaresinaolsäure und/ oder Siaresinalsäure, oder es kann frei von diesen sein. Die Erfindung kann jedoch insbesondere auch ohne Bezugnahme auf die Ausführungen dieses Absatzes verstanden sein.

Nach einer bevorzugten Variante ist die Alkoholkomponente der Baumharzester ein einwertiger Alkohol oder enthält einen solchen, bspw. sind ≥ 50-75% der Alkoholreste einwertige Alkohole.

Insbesondere kann die Alkoholkomponente der Baumharzester auch mehrwertige Alkohole, beispielsweise 2-, 3-, und/oder 4-wertige Alkohole, wie z.B. Glycol, Glycerin, Pentaerythritol und Mischungen derselben, insbesondere Glycol und Glycerin einzeln oder als Mischungen derselben, enthalten oder aus diesen bestehen. Es können ≥ 50-75% der Alkoholreste mehrwertige Alkohole sein, was sich insbesondere auf die oben genannten bezieht. Hierdurch sind die Eigenschaften der Ester und damit des Haftmittels einstellbar, z.B. deren Haftkraft und/oder Glas- bzw. Erweichungstemperatur.

Der Alkohol der Baumharzester kann ein C1 bis C20- oder C1 bis C15-Alkohol sein oder solche umfassen, vorzugsweise ein C2 bis C8-Alkohol, gegebenenfalls auch Methylalkohol .Es können jeweils ≥ 50-75% oder ≥ 80-90% der Alkoholkomponente derartige Alkohole sein, oder praktisch 100%.

Oftmals ist eine Reinigung der als Haftmittel einsetzbaren nachwachsenden Rohstoffe, beispielsweise Baumharze oder Terpene vorteilhaft, insbesondere wenn diese eine nur geringe Beständigkeit gegen Oxidationsmittel und/oder UV-Strahlung aufweisen. Die Reinigung kann insbesondere eine Destillation und/oder ein Auslaugungsverfahren mit geeignetem Lösungsmittel zur Entfernung bestimmter Komponenten wie z. B. Terpenalkohole und/oder Kohlenwasserstoffe, sein. Als Lösungsmittel können beispielsweise aliphatische und/oder aromatische Kohlenwasserstoffe, Ester, Ether und Ketone bzw. pflanzliche oder mineralische Öle oder Kombinationen derselben eingesetzt werden, gegebenenfalls aber auch Wasser.

Ferner hat sich, insbesondere in Kombination mit einer Reinigung, eine Derivatisierung der nachwachsenden Rohstoffkomponente als besonders vorteilhaft herausgestellt, um ein Haftmittel mit verbesserten und/oder reproduzierbaren Eigenschaften und zudem langer Lebensdauer und UV-Beständigkeit zu erhalten. Dies gilt insbesondere für die Gruppe von Haftmitteln auf Basis von Baumharzen und/oder Baumharzestern. Die Derivatisierung kann durch eine oder mehrere der nachfolgenden Methoden erfolgen: Disproportionierung, Dimerisierung, Polymerisierung, Hydrierung, Addition ungesättigter oder gesättigter Verbindungen, Veresterung, Umesterung, Amidisierung, Salzbildung (insbesondere als Alkalisalze), gegebenenfalls auch umfassend Oxidation und/oder Reduktion, vorzugsweise bei den beiden letzteren unabhängig voneinander unter Erhalt des Kohlenstoffgerüstes der nachwachsenden Rohstoffkomponenten; gegebenenfalls einschließlich oxidativer Spaltung von C-C-Doppelbindungen unter Fragmentierung, vorzugsweise ausgenommen derartiger oxidativer Spaltung (unter Oxidation/Reduktion sei jeweils eine solche bezogen auf den Gesamtoxidationszustandes der nachwachsenden Rohstoffkomponente bezogen, also z.B. nicht umfassend eine Disproportionierung), beispielsweise auch Oxidation unter Ketogruppenbildung wobei die Erfindung auch ohne Bezugnahme auf eine solche verstanden sein kann.

Gegebenenfalls ist (i) eine Derivatisierung auf Basis von Oxidations- und/oder Reduktionsreaktionen nicht mit umfasst, wobei ergänzend das oben Gesagte gelten kann, insbesondere bezüglich der Fragmentierung. Gegebenenfalls ist (ii) eine Derivatisierung auf Basis einer Dimerisierung und/oder Polymerisierung nicht mit umfasst. Die Gruppen (i) und(ii) können unabhängig voneinander oder gemeinsam ausgeschlossen sein.

Gegebenenfalls kann eine Derivatisierung durch Oxidation und/oder Reduktion, vorzugsweise unter Erhalt des Kohlenstoffgerüstes der nachwachsenden Rohstoffkomponenten, unabhängig von oder in Kombination mit einem anderen Derivatisierungsschritt durchgeführt werden.

Besonders bevorzugt erfolgt eine Derivatisierung durch zumindest oder nur einen der Schritte der Disproportionierung, Dimerisierung, Polymerisierung, Hydrierung, Addition ungesättigter oder gesättigter Verbindungen, Veresterung, Umesterung, Amidisierung, im speziellen bevorzugt durch zumindest oder nur einen der Schritte der Disproportionierung, Hydrierung, Addition ungesättigter oder gesättigter Verbindungen, Veresterung, Umesterung, Amidisierung, noch spezieller bevorzugt durch zumindest oder nur einen der Schritte der Disproportionierung, Hydrierung, Veresterung, Umesterung, Amidisierung, gegebenenfalls auch ohne den Schritt der Amidisierung.

Gegebenenfalls kann die Derivatisierung auch eine enzymatische oder bakterielle Spaltung, einschließlich Gärungs- oder Fermantationsprozesse umfassen, beispielsweise eine alkoholische Gärung, aerobe oder anaerobe Gärung oder Buttersäuregärung, ohne hierauf beschränkt zu sein. Insbesondere sind hierdurch Alkohole aus nachwachsenden Rohstoffen herstellbar, welche als Alkoholkomponente eines Esters oder Ethers, welcher Bestandteil des Haftmittels ist, vorliegen können. Dies kann ggf. in Kombination mit den oben beschrieben Schritten erfolgen.

Besonders bevorzugt wird ein Derivatisierungsschritt durchgeführt, welcher eine Veränderung der ungesättigten C-C-Bindungen der Harzsäure bzw. des Harzsäureesters darstellt, beispielsweise eine Reaktion ausgewählt aus der Gruppe der Disproportionierung, Hydrierung, Oxidation und Dimerisierung bzw. Polymerisierung unter C-C-Verknüpfung der Dimerisierungs- bzw. Polymerisierungsreaktion, insbesondere ausgewählt aus der Gruppe der Disproportionierung, Hydrierung, Oxidation, im speziellen ausgewählt aus der Gruppe der Disproportionierung und Hydrierung. Die Oxidation erfolgt jeweils vorzugsweise unter Beibehaltung der C-C Verknüpfung der ungesättigten C-C-Bindung, beispielsweise unter Anlagerung einer O-haltigen Verbindung einschließlich Alkohol und Wasser. Hierdurch kann insbesondere die Oxidationsstabilität des Haftmittels erhöht werden, so dass diese zur Verwendung in dem Imprägnat besonders vorteilhaft einsetzbar ist. Die Hydrierung erfolgt vorzugsweise als partielle Hydrierung, also unter Erhalt einer oder mehrerer C=C-Doppelbindungen, gegebenenfalls auch als vollständige Hydrierung. Die Oxidation kann eine Ketongruppenbildung, bspw. ausgehend von - CH2- oder einer -CHOH- Gruppe umfassen, die Erfindung kann jedoch auch ohne eine Bezugnahme auf eine solche verstanden sein.

Weiterhin umfasst die Derivatisierung der Harzsäuren und/oder Baumharzsäureester des nachwachsenden Rohstoffes mindestens eine oder mehrere der Reaktionen der Gruppe Veresterung, Umesterung, Amidisierung, Salzbildung (insbesondere Alkalisalze) unter Bildung eines Carboxylat-Salzes. Besonders bevorzugt ist mindestens eine oder mehrere der Reaktionen aus der Gruppe Veresterung, Umesterung, Amidisierung umfasst, im Speziellen Veresterung und/oder Umesterung. Hierdurch werden die sauren Eigenschaften der Harzsäure durch Derivatisierung der COOH-Gruppe der Harzsäuren beeinflusst, wodurch einerseits deren Klebkraft zusätzlich beeinflusst und an die Erfordernisse des Imprägnats angepasst werden können, zum Anderen wird die Kompatibilität der Harzsäure in dem Haftmittel des Imprägnats, welches weitere Haftmittelkomponenten wie organische Polymere aufweisen kann, verbessert.

Gegebenenfalls können die Derivate ausgewählt sein aus der Gruppe hydrierte, dehydrierte, hydratisierte oder dehydratisierte Verbindungen der jeweiligen nachwachsenden Komponente, gegebenenfalls auch in Kombination miteinander. Die Derivate können hierbei ausgehend von den nachwachsenden Komponenten jeweils teilweise oder vollständig hydriert oder hydratisiert sein, insbesondere können 1, 2, 3 oder mehr C-C-Doppelbindungen der jeweiligen nachwachsenden Komponente hydriert oder hydratisiert. Anstelle einer Hydratisierung (Anlagerung von Wasser an C-C-Mehrfachbindungen), kann jeweils auch eine Anlagerung von Alkohohlen erfolgen. Die verschiedenen Derivatisierungsfunktionen können gegebenenfalls auch in Kombination vorliegen, in der gleichen Verbindung oder in Form von Mischungen. Die Derivatisierungen können sich jeweils insbesondere auf Harzsäuren und/oder Harzsäureester oder Kolophoniumharzsäuren und/oder deren Ester oder allgemein Polyterpene, Polyterpencarbonsäuren und/oder deren Ester beziehen. Die Erfindung kann jedoch auch ohne eine Bezugnahme auf die Ausführungen dieses Absatzes verstanden sein.

Als besonders bevorzugt hat es sich herausgestellt, wenn einer oder mehrere der Derivatisierungsreaktionen aus der Gruppe I (Disproportionierung, Hydrierung, Dimerisierung, Polymerisierung) in Kombination mit mindestens einem Derivatisierungsschritt aus der Gruppe II (Veresterung, Umesterung, Amidisierung, Salzbildung) vorgenommen wird. Die hierdurch erhaltenen Haftmittel weisen eine hohe Klebkraft auf und sind im Imprägnatsystem der erfindungsgemäßen Dichtbänder besonders geeignet und vorteilhaft. Im Speziellen erfolgt eine Derivatisierung durch zumindest einen der Schritte der Disproportionierung, Hydrierung und Dimerisierung mit einem der Schritte der Veresterung, Umesterung, gegebenenfalls einschließlich Amidisierung. Im Speziellen erfolgt mindestens einer der Schritte der Disproportionierung, Hydrierung in Kombination mit einem der Schritte der Veresterung, Umesterung, gegebenenfalls einschließlich Amidisierung.

Die Derivatisierung durch Veresterung / Umesterung erfolgt vorzugsweise unter Verwendung eines mehrwertigen Alkohols (besonders bevorzugt Glycol, Glycerin, Pentaerythritol; im Speziellen bevorzugt: Glycol, Glycerin) und/oder in Kombination mit einem einwertigen Alkohol, vorzugsweise einem C1- bis C15- oder C1- bis C20-Alkohol, insbesondere einem C2- bis C12-Alkohol, besonders bevorzugt C2- bis C10- oder C2- bis C8-Alkohol, im Speziellen einem C4- bis C8-Alkohol, wie Ethanol, Propanol, Butanol, Hexanol oder Octanol (insbesondere Ethylhexanol) (einschließlich jeweils deren Isomere).

Es können jeweils ≥ 50-75% oder ≥ 80-90% der Alkoholkomponente des Baumharzesters ein Alkohol aus der Gruppe einwertiger Alkohol, Glycol, Glycerin, Pentaerythritol sein, im Speziellen ausgewählt aus der Gruppe Glycol, Glycerin oder alternativ aus der Gruppe der einwertigen Alkohole.

Insbesondere können Glycerin- und/oder Glycolester von hydrierten Harzsäuren eingesetzt werden, insbesondere zu ≥ 50-75% oder ≥ 80-90% der Baumharzesterkomponente.

Eine Addition ungesättigter Verbindung kann insbesondere eine Addition von Maleinsäure oder anderen mehrwertigen Carbonsäuren, insbesondere C2- bis C10-, im Speziellen C2- bis C6-Carbonsäuren, umfassen.

Nach einer weiteren alternativen Ausführungsform enthält das Imprägniermittel als Haftmittel ein organisches Polymer mit funktionellen Seitengruppen, wobei die Seitengruppen aus nachwachsenden Rohstoffen hergestellt sind. Die Seitengruppen können insbesondere durch Kondensationsreaktionen mit dem Polymer-Grundgerüst verbunden sein. So kann das Polymer-Grundgerüst reaktive Seitengruppen enthalten wie beispielsweise Hydroxy-, Amino- und/oder Carboxylatgruppen, im Speziellen Carboxylatgruppen. Die aus nachwachsenden Rohstoffen erhaltenen funktionellen Seitengruppen können dann beispielsweise durch Kondensationsreaktionen mit den Seitengruppen des Polymer-Grundgerüstes verbunden sein und beispielsweise ausgewählt sein aus der Gruppe Alkohole, Amine, Carbonsäuren, insbesondere Alkohole. Durch die Kondensationsreaktion kann insbesondere eine Ester- oder Amidgruppe ausgebildet werden, oder beides. Besonders bevorzugt stellt das organische Polymer ein solches mit Carboxylat-Seitengruppen dar, insbesondere ein Acrylat und/oder Methacrylat, wobei jeweils Copolymere und/oder Blends mit anderen Polymeren mit umfasst sind, und einem Alkohol aus nachwachsenden Rohstoffen. Hierdurch ist es ermöglicht, einerseits Polymere als Haftmittel einzusetzen, welche sich prinzipiell besonders bewährt haben, insbesondere Acrylate und/oder Methacrylate, andererseits können diese Polymere durch die Anordnung von funktionellen Seitengruppen aus nachwachsenden Rohstoffen ökologisch vorteilhaft ausgestaltet werden. Allgemein können die Seitengruppen C1- bis C10-Alkohole, insbesondere C1- bis C6-Alkohole, im Speziellen C2- bis C4-Alkohole aufweisen oder aus diesen bestehen, oder C1- bis C10-Amine, im Speziellen C1- bis C6-Amine oder C2- bis C4-Amine umfassen oder aus diesen bestehen. Diese Verbindungen können aus nachwachsenden Rohstoffen besonders einfach gewonnen werden bzw. gewonnen worden sein, beispielsweise durch natürliche Verfahren wie Gärung (bspw. alkoholische Gärung), enzymatische Spaltung, Fermentation oder dergleichen. Derartige Verfahren sind allgemein bekannt. Insbesondere können die Alkohole ausgewählt sein aus der Gruppe Ethanol, Propanol und Butanol, insbesondere können sie Ethanol und/oder Butanol darstellen. Gegebenenfalls können die aus nachwachsenden Rohstoffen gewonnenen Alkohole in Amine oder andere Verbindungen umgewandelt werden, welche als funktionelle Seitengruppen der polymeren Haftmittel einsetzbar sind.

Nach einer dritten bevorzugten Variante enthält das Haftmittel des Imprägnats ein organisches Polymer, wobei die Monomeren des polymeren Grundgerüstes aus nachwachsenden Rohstoffen gebildet sind. So kann beispielsweise aus durch aus nachwachsenden Rohstoffen erhaltenes Butanol Buttersäure hergestellt bzw. Buttersäure unmittelbar aus nachwachsenden Rohstoffen hergestellt werden, beispielsweise durch Buttersäuregärung. Aus Buttersäure kann dann durch Dehydrierung Acrylsäure hergestellt werden, aus welcher in bekannter Weise Polyacrylate herstellbar sind.

Die Variante III kann alternativ oder zusätzlich mit der Variante II (funktionelle Seitengruppen des organischen Polymers aus nachwachsenden Rohstoffen) realisiert werden kann. Es kann auch die Variante I (Haftmittel aus Baumharzen / Terpenen) in Kombination mit der Variante II und/oder der Variante III realisiert sein, um Haftmittelkomponenten für erfindungsgemäße Dichtungsbänder herzustellen.

Das erfindungsgemäße Haftmittel aus nachwachsenden Rohstoffen (bzw. Derivaten desselben), insbesondere wie oben beschrieben, kann ein mittleres Molekulargewicht von bis zu 600 u oder bis zu 1200 u oder bis zu 2400 oder bis 3600 u (u: atomare Einheiten) aufweisen, also im Vergleich mit üblichen Polymeren vergleichsweise niedermolekular sein, ohne hierauf beschränkt zu sein.

Das erfindungsgemäße Haftmittel aus nachwachsenden Rohstoffen (bzw. Derivaten desselben) kann in Kombination mit einem organischen Polymer als Haftmittelkomponente eingesetzt werden, welches nicht aus nachwachsenden Rohstoffen hergestellt ist. Hierdurch kann einerseits das Imprägniermittel aufgrund dessen Haftmittelkomponente aus nachwachsenden Rohstoffen ökologisch vorteilhaft ausgebildet sein, andererseits kann das Haftmittel an bisherige Haftmittelsysteme besonders gut angepasst sein. Als derartige Polymere können insbesondere Acrylate (wie beispielsweise Ethylhexylacrylate, Vinylacrylate, Alkoxyacrylate wie Butylacrylat), Methacrylate, Styrol-Butadien-Copolymere, Vinylacetat-Ethylen-Polymere, Polyvinylacetate, Polychloroprene und dergleichen jeweils einzeln oder in Kombination eingesetzt werden, insbesondere Acrylate und/oder Metharcrylate. Styrol-Butadien-Copolymere, Vinylacetat-Ethylen-Polymere und Polyvinylacetate oder Mischungen derselben (ggf. auch einschließlich Polychloroprene) können als Copolymere mit Acrylaten und/oder Methacrylaten eingesetzt werden.

Die polymeren Bestandteile des Haftmittels und/oder das Imprägniermittel sind vorzugsweise filmbildend, d.h. durch Aufbringung eines Imprägniermittels, welches die polymeren Bestandteile in gelöster oder dispergierter Form enthält, kann durch Trocknung ein durchgehender Film erzeugt werden. Die Trocknung kann beispielsweise bei 50°C bei ruhender Luft und 10% Luftfeuchtigkeit bis zur Gewichtskonstanz durchgeführt werden, was allgemein im Rahmen der Erfindung gelten kann. Sind in dem Imprägniermittel Haftmittel aus nachwachsenden Rohstoffen enthalten, insbesondere auf Basis von Baumharzen und/oder Terpenen, so bildet das Haftmittel insgesamt bei Trocknung unter den oben genannten Bedingungen einen durchgehenden Film. Dies gilt auch dann, wenn das Imprägniermittel partikelförmige Komponenten wie Füllstoffe, Flammschutzmittel wie Intumeszenzstoffe oder dergleichen enthält. Das Haftmittel aus nachwachsenden Rohstoffen kann hierbei eigenständig filmbildend sein (also beispielsweise bei Beschichtung eines Substrates mit einer wässrigen Lösung oder Dispersion dieses Haftmittels) oder aber in Kombination mit dem organischen Polymer, welches vorzugsweise, aber nicht zwingend, zumindest teilweise aus nachwachsenden Rohstoffen bestehen kann.

Vorzugsweise besteht das Haftmittel bezogen auf dessen organische Bestandteile zu ≥ 10-20 Gew.-% oder ≥ 30-40 Gew.-% des Trockengewichtes desselben (Trocknung bei 50°C bis Gewichtskonstanz, 10% Luftfeuchtigkeit, ruhende Luft, was in Bezug auf die Angabe des Trockengewichtes des Haftmittels allgemein im Rahmen der Erfindung gilt) oder vorzugsweise ≥ 50-60 Gew.-% oder ggf. ≥ 80-90 Gew.-% aus nachwachsenden Rohstoffen oder deren Derivaten. Diese Angaben können sich auch auf Komponenten beziehen, welche aus nachwachsenden Rohstoffen erhalten sind, oder deren Derivaten. Dies kann jeweils ggf. auch in Bezug auf das Imprägnat gelten. Enthält das Haftmittel nachwachsende Rohstoffe in derivatisierter Form, so sind bei dieser Betrachtung auch diese Bestandteile solchen aus nachwachsenden Rohstoffen zuzuordnen. Umfasst das Haftmittel organische Polymere, wobei nur deren Seitengruppen aus nachwachsenden Rohstoffen hergestellt sind, beispielsweise veresterte Alkohole, so sind nur die Seitengruppenbestandteile den nachwachsenden Rohstoffen zuzuordnen. Beispielsweise können die Alkoholatgruppen durch Esterspaltung freigesetzt und quantitativ bestimmt werden.

Besonders bevorzugt weist das Imprägnat bezogen auf dessen Trockengewicht einen Anteil von ≥ 10-15 Gew.-% oder ≥ 20-40 Gew.-% an Haftmittel (aus nachwachsenden und/oder nicht nachwachsenden Rohstoffen) auf. Der Haftmittelanteil des Imprägnats bezogen auf dessen Trockengehalt kann ≤ 80-90 Gew.-% oder ≤ 50-65 Gew.-% oder ≤ 30-40 Gew.-% betragen. Der Rest können Brandschutzmittel wie Intumeszenzmittel (z.B. Blähgraphit, Phosphate wie Aluminiumphosphat, Hydroxide wie Aluminiumhydroxid, Silikate wie Alkalisilikate (z.B. Wasserglas, Vermiculit usw.) Hilfsstoffe wie Emulgatoren, Füllstoffe (z.B. mineralische) und dgl. sein.

Gegebenenfalls können auch bis zu 10-20 Gew.-% oder bis zu 30-50 Gew.-% oder bis zu 65-85 Gew.-% der organischen Bestandteile von Haftmittel oder Imprägnat aus nicht-nachwachsenden Rohstoffen bestehen. Dies kann insbesondere in Kombination mit dem oben Gesagten gelten. Hierdurch können die Eigenschaften des Imprägnats, insbesondere auch bzgl. Rückstellverhalten des Schaumstoffes, Schlagregendichtigkeit usw. an die jeweiligen Erfordernisse in besonderer Weise eingestellt werden, dennoch ein vergleichsweise hoher Gehalt an Haftmittel aus nachwachsenden Rohstoffen realisiert sein.

Vorzugsweise enthält das Imprägnat ≥ 5 Gew.-% oder ≥ 10-20 Gew.-% an polymeren Haftmitteln, vorzugsweise ≥ 30-40 Gew.-% oder ≥ 50-65 Gew.-%, bezogen auf das Trockengewicht desselben. Der Gehalt an polymeren Haftmitteln in dem Imprägnat kann ≤ 70-80 Gew.-% oder ≤ 50-60 Gew.-% oder ≤ 30-40 Gew.-% bezogen auf das Trockengewicht des Imprägnats betragen. Die polymeren Haftmittel können insbesondere Acrylate und/oder Methacrylate sein.

Der Gehalt an Baumharzen und/oder Terpenen (jeweils einschließlich deren Derivaten, einschließlich Baumharzester, insbesondere Kolophoniumharzester), in dem Haftmittel kann ≥ 5 Gew.-% oder ≥ 10-15 Gew.-%, vorzugsweise ≥ 20-25 Gew.-% oder ≥ 30-35 Gew.-% betragen (bezogen auf das Trockengewicht des Haftmittels). Diese Gehalte können sich jeweils explizit auf Baumharze, einschließlich Baumharzsäuren und deren Derivate, hier einschließlich Baumharzester wie Kolophoniumharzester, beziehen. Diese Gehalte können sich jeweils explizit auch auf Baumharzester, insbesondere Kolophoniumharzester, beziehen. Diese Gehalte können sich jeweils auch auf den Gehalt der Baumharzsäuren und Derivate, einschließlich Baumharzester, insbesondere Kolophoniumharzester, im Imprägnat beziehen. Diese Gehalte können sich jeweils auch auf den Gehalt der Baumharzsäuren und Baumharzester beziehen. Dies bezieht sich jeweils auf das Trockengewicht von Haftmittel oder Imprägnat.

Der Gehalt an Baumharzen, einschließlich Baumharzsäuren und deren Derivate (einschließlich Baumharzester, insbesondere Kolophoniumharzester), und/oder Terpenen (einschließlich Baumharzester, insbesondere Kolophoniumharzester) an dem Haftmittel kann ≤ 50-60 Gew.-% oder ≤ 35-40 Gew.-% oder ggf. auch ≤ 15-20 Gew.-% betragen, dies kann sich jeweils auch nur auf den Gehalt an Baumharzen, einschließlich Baumharzsäuren und deren Derivate wie Baumharzester, insbesondere Kolophoniumharzester, beziehen. Diese Gehalte können sich jeweils auch auf den Gehalt der Baumharzsäuren und Derivate, einschließlich Baumharzester, insbesondere auf den Gehalt an Baumharzsäuren und Baumharzester beziehen. Diese Gehalte können sich jeweils explizit auch auf Baumharzester, insbesondere Kolophoniumharzester, beziehen. Dies kann sich gegebenenfalls jeweils auch auf das Imprägnat beziehen. Dies bezieht sich jeweils auf das Trockengewicht von Haftmittel oder Imprägnat.

In dem Haftmittel liegt das Gewichtsverhältnis der (i) Haftmittel auf Basis von Baumharzen und/oder Terpenen zu (ii) den Haftmitteln auf Basis organischer Polymere wie insbesondere Acrylate (unabhängig vom Anteil der Komponente (ii) aus nachwachsenden Rohstoffen) vorzugsweise im Bereich von 1:4 bis 25:1 oder 1:2 bis 16:1, besonders bevorzugt im Bereich von 1:1 bis 12:1, insbesondere im Bereich von 1:1 bis 8:1 oder 2:1 bis 6:1 oder 3:1 bis 4:1. Diese Verhältnisses können sich jeweils auch auf den Gehalt der Baumharzsäuren und Derivate, insbesondere den Gehalt an Baumharzsäuren und Baumharzester, im Haftmittel beziehen. Diese Verhältnisse können sich jeweils explizit auch auf den Gehalt der Baumharzester, insbesondere Kolophoniumharzester, beziehen. Hierdurch ergibt sich einerseits ein vorteilhaftes Rückstellverhalten des Dichtbandes, bspw. in Bezug auf dessen Zeitdauer bei Raumtemperatur, andererseits erfolgt auch bei Temperaturen unterhalb Raumtemperatur, beispielsweise bei 5°C, eine definierte und nicht zu langsame Rückstellung. Andererseits kann durch die Änderung des Mischungsverhältnisse der Komponenten gegebenenfalls auch das Rückstellverhalten bei anderen Temperaturen, bspw. bei 30-35°C oder bei 40°C eingestellt werden.

Durch die Bereitstellung eines Imprägnats enthaltend Haftmittel auf Basis von Baumharzsäuren und deren Derivate und/oder Polyterpenen und deren Derivate, insbesondere von Baumharz- bzw. Kolophoniumester, können die Haftmitteleigenschaften variiert werden. Dies insbesondere, wenn die Haftmittel zugleich polymere Acrylate/ Methacrylate enthalten, wobei sich diese als im Wesentlichen ohne Störeffekte kombinierbar bzw. mischbar herausgestellt haben. Dies gilt insbesondere im Hinblick auf das Verhältnis von Kohäsion und Adhäsion innerhalb des Imprägnatmittelfilmes bzw. zwischen Imprägnat und den Porenwänden des Schaumstoffkörpers. Dies gilt auch in Bezug auf die Fließeigenschaften des Haft- bzw. Imprägniermittels zur Verhinderung einer "Ausblutung" unter Druck, wie z.B. bei starker Kompression im Einbauzustand. Das Ausbluten kann beispielsweise bei erhöhter Temperatur (z.B. 50°C) und erhöhtem Druck (z.B. bei einer Kompression auf ca. 7 % des Volumens des Dichtbandes gegenüber dem Ausgangsvolumen bei vollständiger freier Rückstellung) untersucht werden. Es wird unter diesen Bedingungen, wie sie sich bei temperaturbedingten Bauteilverschiebungen im Fugenbereich ohne weiteres ergeben können, bei dem mit dem erfindungsgemäßen Imprägnat imprägnierten Dichtband praktisch kein Fließen des Imprägniermittelfilmes beobachtet, welches sich bspw. durch Ansammlung von Imprägniermittel ("Ausbluten") an den nicht druckbelasteten Dichtbandflächen bemerkbar machen kann, so dass sich eine erhöhe Lebensdauer der Fugenabdichtung ergibt. Dies gilt insbesondere dann, wenn das Haftmittel in Form einer Dispersion eingesetzt wird, insbesondere einer wässrigen Dispersion. Das Fließ- bzw. Ausblutungsverhalten kann bspw. durch entsprechende Versuche im Trockenschrank simuliert werden, wobei bei erfindungsgemäßen Dichtbändern auch nach 1-2 Stunden oder auch nach 5-10 Stunden oder darüber hinaus, bspw. nach 24 oder 48 Stunden unter den genannte Bedingungen keine Veränderung bzw. kein Ausbluten zu beobachten ist, wobei z.B. durch Imprägnierung mit Acrylatlösungen hergestellte Dichtbänder ein deutlich instabileres Verhalten zeigen. Dies kann jeweils für Raumtemperatur (20°C) als auch bei anderen Temperaturen wie bspw. 0-5°C oder 30-35°C oder 40°C gelten. Dies gilt insbesondere, wenn das Haftmittel zumindest teilweise oder überwiegend aus Baumharzen und/oder Terpenen, einschließlich deren Derivaten, insbesondere Baumharzester bzw. Kolophoniumestern, besteht, wie im Rahmen der Erfindung beschrieben. Vorzugsweise liegen hierbei sowohl die Komponenten aus nachwachsenden Rohstoffen, insbesondere Baumharz- bzw. Kolophoniumester und/oder Polyterpene, und/ oder das weitere Polymer wie insbesondere Acylat/Methacrylat, in Form dispergierter Teilchen vor.

Durch den Einsatz von Haftmitteln auf Basis nachwachsender Rohstoffe, insbesondere auf Basis von Baumharzen wie Kolophoniumharzen bzw. Bauharz- und Kolophoniumharzsäuren und jeweils deren Derivaten, insbesondere Estern, und/oder Polyterpenen, können überraschenderweise Imprägnatschichten mit bei 0°C deutlich höherer Zugfestigkeit erhalten werden, als solche auf Basis herkömmlicher Polymere, insbesondere Acrylate.

Die Zugfestigkeit der Haftmittelschicht kann ≥ 0,005 N/mm² oder ≥ 0,01 N/mm² oder ≥ 0,05 N/mm² betragen, sie liegt vorzugsweise im Bereich von 0,01 bis 4 N/mm² oder 0,05 bis 4 N/mm² oder auch 0,4 bis 4 N/mm², vorzugsweise im Bereich von 0,1 bis 2,5 N/mm² oder 0,75 bis 2,5 N/mm², besonders bevorzugt im Bereich von 0,75 bis 1,85 N/mm². Dies bezieht sich auf eine Prüfung in Anlehnung an DIN 53504 bei Normklima an vorgekühlten Proben (0°C / 24 Stunden) und eine Prüfgeschwindigkeit von 500 mm/min. Im Übrigen sei auf die Versuchsbedingungen gemäß DIN EN ISO 1798 verwiesen. Die Prüfung erfolgte an einem Haftmittelfilm, welcher durch Trocknung bei 50-75°C und 10% relativer Luftfeuchtigkeit bei ruhender Luft (Trockenschrank) und Trocknung bis zur Gewichtskonstanz erhalten wurde. Die Reißdehnung des Haftmittelfilmes kann im Bereich von 0,5 bis 100%, vorzugsweise 0,7 bis 20% oder im Bereich von 0,8 bis 10%, beispielsweise 3 bis 5% liegen. Der Prüfkörper kann jeweils in geeigneter Dicke, z.B. 1 bis 3 mm, und geeigneter Breite, z.B. 5 bis 30 mm, ausgebildet sein und verbreiterte Endbereiche aufweisen.

Allgemein im Rahmen der Erfindung weist bevorzugt das Imprägnat eine Schäladhäsion (Klebkraft) auf Stahl von ≥ 0,01 N/25mm oder ≥ 0,05 N/25mm, vorzugsweise ≥ 0,1 N/25mm auf, beispielsweise liegt diese im Bereich von 0,25 bis 0,5 N/ 25mm oder mindestens 1 bis 2 N/25mm bei 23°C/50% relativer Luftfeuchtigkeit auf, ermittelt in einer Prüfung in Anlehnung an DIN EN 1939: 2003 (D), Verfahren 3 (Tabelle 1), wobei in Abweichung hierzu der Klebefilm durch eine 5 kg schwere Rolle angedrückt und eine Wartezeit zwischen Applikation und Prüfung von 10 Minuten eingehalten wird. Die eingesetzte Klebeschicht ist 25mm breit und 300mm lang. Die Abschälung erfolgt in einer Richtung senkrecht zu der Breite des Klebebandes. Der Abziehwinkel, wie in DIN EN 1939: 2003(D) definiert, beträgt 180°C, die Abzugsgeschwindigkeit 300mm/Minute. Vorzugsweise weist die Schäladhäsion des Klebemittels unter den genannten Bedingungen ≥ 1-3 N/25mm auf (die Klebkraft wird in Abweichung zu der DIN bezogen auf eine Breite 25 mm angeben). Die Schäladhäsion kann ≤ 30-50 N/25mm oder auch ≤ 10-20 N/25mm betragen, gegebenenfalls auch ≤ 5 N/25mm. Hierdurch wird eine ausreichende Adhäsion mit den Zellwänden der Porenstruktur des Schaumstoffkörpers und damit eine ausreichende Rückstellverzögerung erreicht.

Durch das erfindungsgemäße Imprägnat kann die Imprägnierung des Schaumstoffkörpers derart erfolgen, dass nach Kompression auf ca. 15 Vol.-% bezogen auf das Ausgangsvolumen des Dichtbandes bei vollständiger Entspannung (maximaler Rückstellung) die vollständige Rückstellung des Dichtbandes erst nach ≥ 0,25-0,5 Stunden, ≥ 1-2 Stunden oder ≥ 5-10 Sunden erfolgt, vorzugsweise ≤ 48 -72 Stunden oder ≤ 24 Stunden. Diese Angaben beziehen sich jeweils auf 20°C.

Vorzugsweise ist das Haftmittel in der wässrigen Phase des Imprägniermittels gelöst oder dispergiert, vorzugsweise dispergiert, wobei auch einzelne Bestandteile gelöst und andere dispergiert sein können. Insbesondere können die Haftmittel auf Basis nachwachsender Rohstoffe in der wässrigen Phase dispergiert sein. Mit derartigen Imprägniermitteln können Dichtbänder auch niedriger Luftdurchlässigkeit homogen imprägniert werden.

Mittels des Imprägnats sind auch Schaumstoffmaterialien nur geringer Luftdurchlässigkeit zur verzögerten Rückstellung imprägnierbar. Die Luftdurchlässigkeit des Schaumstoffmaterials (vor der Imprägnierung) kann bis zu 600 l/m²s betragen, beispielsweise nur bis zu 200-300 l/m²s oder auch nur bis zu 100-150 l/m²s oder sogar nur 50-75 l/m²/s oder weniger. Dies versteht sich jeweils und auch allgemein im Rahmen der Erfindung unter den Prüfbedingungen Frank-Prüfgerät Nr. 21443, 100 cm² Probendurchmesser, 1 cm Probenstärke, 0,5 mbar Differenzdruck, entspannter Zustand, DIN EN ISO 9237.

Insbesondere können die erfindungsgemäßen Haft- bzw. Imprägniermittel Acrylate, im speziellen, Acrylatdispersionen mit Acrylatpolymerteilchen enthalten. Diese weisen einen Tyndall-Effekt auf, beispielsweise auch bei Verwendung von sichtbarem Licht oder Licht mit einer Wellenlänge von bis zu 380 nm, bis zu 300 nm, bis zu 250-200 nm oder auch bis zu 100 nm. Gegebenenfalls können auch wasserlösliche Acrylate eingesetzt werden. Besonders bevorzugt weisen die Acrylatpolymerteilchen einen mittleren Durchmesser ≥ 5-10 nm auf, vorzugsweise ≥ 25-50 nm oder ≥ 100-200 nm. Andererseits hat es sich herausgestellt, dass für bestimmte Anwendungsfälle die Acrylatpolymerteilchen auch einen mittleren Durchmesser von ≥ 500-750 nm oder ≥ 1-5 µm oder ≥ 10-25 µm aufweisen können. Als besonders bevorzugt hat es sich herausgestellt, wenn die Acrylatpolymerteilchen einen mittleren Durchmesser von ≤ 100 -150 µm oder ≤ 50-75 µm, vorzugsweise ≤ 10-20 µm oder auch besonders bevorzugt ≤ 3-5 µm aufweisen. Hierdurch sind Schaumstoffe unterschiedlicher Luftdurchlässigkeiten einfach homogen über deren gesamten Querschnitt imprägnierbar, auch wenn im Einzelfall eine nur zonenweise Imprägnierung erfolgen kann.

Insgesamt liegt der mittlere Durchmesser der Acrylatpolymerteilchen somit vorzugsweise im Bereich von 5 nm bis 100 µm oder insbesondere 50 nm bis 50 µm, besonders bevorzugt im Bereich von 100 nm bis 10 µm. Die übrigen im Rahmen der Erfindung genannten (besonders) bevorzugten oberen und/oder unteren Grenzwerte des mittleren Teilchendurchmessers verstehen sich insbesondere auch als bevorzugte Beschränkungen für jeden der drei hier angegebenen bevorzugten Bereiche.

Vorzugsweise enthält das Acrylatpolymer ≤ 40-50 Gew.-% oder ≤ 20-30 Gew.-% an ionischen Polymeren, besonders bevorzugt ≤ 10-15 Gew.-% oder ≤ 3-5 Gew.-% an ionischen Polymeren oder praktisch keine. Die ionischen Polymere können bspw. kationische Polymere, ggf. auch anionische Polymere oder zwitterionische Polymere sein. Die oben genannten Gehalte (Gew.-%) an ionischen Polymeren bezieht sich vorzugsweise auf den Gesamtgehalt an ionischen Polymeren. Gegebenenfalls können sich diese Gehalte im speziellen jeweils auch auf den Gehalt an kationischen Polymeren beziehen. Die ionischen Gruppen können insbesondere Seitengruppen der Polymere sein. Die jeweiligen Gegenionen können solche sein, wie sie auf dem Gebiet der jeweiligen Polymere, insbesondere Acrylate, bekannt sind, insbesondere Alkalimetall- oder Ammoniumionen. Durch den geringen Anteil an ionischen Polymeren lassen sich die imprägnierten Dichtbänder geringer Luftdurchlässigkeit leichter herstellen, was auf eine leichtere Verflüchtigung von Wasser aus der Porenstruktur zurückgeführt wird und weisen eine geringere Wasseraufnahme bei Beaufschlagung mit Feuchtigkeit auf, als bei höheren Anteilen an ionischen Polymeren. Trotz des hohen Luftwiderstandes der Schaumstoffe können diese mit derartigen Polymeren homogen imprägniert werden.

Als besonders vorteilhaft hat es sich erwiesen, wenn die Dispersion Acrylatpolymerteilchen mit einem mittleren Durchmesser von > 150 µm zu einem Anteil von weniger als 10 Gew.-%, vorzugsweise weniger als 2-5 Gew.-% oder weniger als 0,5-1 Gew.-% aufweist, um eine homogene Imprägnierung des Schaumstoffmaterials zu erzielen. Besonders bevorzugt weist das Imprägniermittel Acrylatpolymerteilchen mit einem mittleren Durchmesser von > 100 µm mit einem Anteil von ≤ 5-10 Gew.-% oder ≤ 1-3 Gew.-% auf. Besonders bevorzugt weist die Dispersion Acrylatpolymerteilchen mit einem mittleren Durchmesser von > 75 µm zu einem Anteil von ≤ 5-10 Gew.-% oder ≤ 1-3 Gew.-% auf. Die Gewichtsangabe bezieht sich hierbei allgemein auf das Gesamtgewicht der Acrylatpolymerteilchen des Imprägniermittels.

Gegebenenfalls können die Ausführungen zu den Acrylatpolymerteilchen auch für andere Polymerteilchen gelten, sie sind für erstgenannte jedoch besonders vorteilhaft.

Ferner kann das in der Dispersion eingesetzte Polyacrylat ein vernetztes Polymer sein oder enthalten. Hierdurch können das Fließverhalten des Imprägniermittelfilmes (wie oben beschrieben) und/oder die Klebkraft sowie Adhäsion des Filmes an den Porenwänden eingestellt werden. Die Vernetzung kann durch Knüpfung von C-C-Bindungen erfolgen, beispielsweise über ungesättigte C-C Bindungen innerhalb des Polymergerüstes, und/oder durch Vernetzung der Estergruppen, bzw. durch mehrwertige, überbrückende Alkohole. Der Vernetzungsgrad kann im Mittel ≥ 0,25-1 oder ≥ 5-10 Vernetzungsstellen auf 1000 Acrylsäureeinheiten des Polymers betragen, gegebenenfalls ≥ 10-25 oder ≥ 50-100 Vernetzungsstellen oder auch bis zu 200 Vernetzungsstellen oder darüber hinaus. Der Vernetzungsgrad kann ≤ 200-250 oder ≤ 20-100 Vernetzungsstellen je 1000 Acrylsäureeinheiten des Polymers betragen, ohne hierauf beschränkt zu sein. Es hat sich herausgestellt, dass eine Vernetzung der Polymere vorteilhaft aber nicht zwingend ist, insbesondere auch in Hinblick auf die vorteilhaften Fließeigenschaften der erfindungsgemäßen Imprägniermittel/Klebemittelfilme gegenüber aus Lösung erzeugten Filmen, was möglicherweise auf die unterschiedlichen Filmbildungsmechanismen zurückzuführen ist.

Das Acrylatpolymer-Imprägniermittel kann ein mittleres Molekulargewicht von ≥ 1.000, vorzugsweise ≥ 1.500-2.000 oder ≥ 2.500-5.000 aufweisen, gegebenenfalls auch ≥ 10.000-20.000, unter Umständen auch ≥ 50.000-100.000 oder darüber hinaus, jeweils bezogen auf die Anzahl der monomeren Einheiten. Das mittlere Molekulargewicht des eingesetzten Acrylatpolymers kann beispielsweise ≤ 5.000.000-10.000.000 oder ≤ 1.000.000-2.000.000 betragen, gegebenenfalls auch ≤ 250.000-500.000 oder ≤ 100.000. Es hat sich herausgestellt, dass dann einerseits die Acrylatpolymerteilchen eine ausreichende Klebekraft aufweisen, um eine verzögerte Rückstellung zu bewirken, andererseits die Acrylatpolymerteilchen bei nicht zu hohen Molekulargewichten auch gute Filmbildungseigenschaften aufweisen, so dass also beim Trocken die Polymerteilchen untereinander gut vernetzen und "zusammenlaufen" können.

Das eingesetzte Acrylatpolymer kann ein Polymer enthaltend Acrylsäureester und/oder Methacrylsäureester und/oder Acrylsäureamide und/oder Methacrylsäureamide sein, im speziellen Acrylsäureester und/oder Methacrylsäureester. Unter dem Begriff "Acrylsäure" sei im Rahmen der Erfindung im allgemeinen Methacrylsäure mit umfasst, im speziellen engeren Sinn jedoch ausdrücklich auch Acrylsäure als solche verstanden, so dass die "Acrylate" dann Acrylsäureester und -amide darstellen, worauf jeweils ausdrücklich Bezug genommen sei. Als Ester- bzw. Amidkomponenten können insbesondere aliphatische Alkohole oder Amide vorliegen, ohne auf diese beschränkt zu sein, beispielsweise jeweils solche mit C1 bis C10, insbesondere C1 bis C8, ohne hierauf beschränkt zu sein.

Als besonders bevorzugt hat es sich erwiesen, wenn das Acrylatpolymer ein Copolymer ist. Hierdurch kann die Klebekraft der Polymerteilchen an die im Rahmen der Erfindung vorliegenden besonderen Bedingungen speziell angepasst werden, einerseits in Bezug auf die zur verzögerten Rückstellung erforderliche Klebekraft, andererseits in Bezug auf Adhäsionskräfte der in der Dispersion vorliegenden Teilchen in Bezug auf die Wandungen der Porenstruktur bei der Einbringung der Dispersion in die Schaumstoffstruktur und/oder die Filmbildungseigenschaften der Polymerteilchen beim Trocknen des imprägnierten Dichtbandes, welche sich für eine gleichmäßige Rückstellung über Querschnitt und Länge des Dichtbandes als wichtig herausgestellt haben. Es hat sich als günstig erwiesen, wenn die Copolymer-Komponenten ausgewählt sind aus der Gruppe Butadien, Vinylverbindungen, Alkylen- insbesondere Polyethylenverbindungen, substituierte (insbesondere alkylierte) Butadiengruppen, Styrol, Urethane, Polyether oder Kombinationen derselben. Hierbei können statistische Copolymere aus Acrylat/Metacrylat-Einheiten mit einem oder mehreren anderen Copolymeren, insbesondere Butadien- und/ oder Styrol-Copolymeren, vorliegen (z.B. als Styrol-Butadien -Coplymere) oder aber Blockpolymere mit Acrylat/ Metacrylat-Blockeinheiten in Kombination mit Blockeinheiten mit einem oder mehreren der anderen Copolymeren. Vorzugsweise enthalten diese Copolymere ≥ 10-30 Gew.-% oder ≥ 50-60 Gew.-%, vorzugsweise ≥ 70-80 Gew.-% oder ≥ 90-95 Gew.-% Acrylat/ Methacrylat Monomereneinheiten. Die Acrylate-Copolymere können ≥ 2-5 Gew.-% oder ≥ 10-15 Gew.-%, gegebenenfalls auch ≥ 20-30 Gew.-% oder ≥ 40-50 Gew.-% andere Copolymere als Acrylat/Methacrylat enthalten, vorzugsweise ≤ 40-50 Gew.-% oder ≤ 60-70 Gew.-% oder ≤ 80-90 Gew.-% derselben. Die genannten Copolymerteilchen können einen Gewichtsanteil von ≥ 5-10 Gew.-% oder ≥ 20-30 Gew.-%, gegebenenfalls ≥ 50-75 Gew.-% an dem Gesamtgewicht der Polymerteilchen der Dispersion (also Trockengewicht polymere Bestandteile) ausmachen, vorzugsweise ≤ 50-75 Gew.-% oder ≤ 85-95 Gew.-% derselben.

Gegebenenfalls können die einzelnen Polymere auch nebeneinander vorliegen, entweder in denselben Partikeln (z.B. als Blends) oder in verschiedenen Partikeln als Mischungen. Gegebenenfalls kann das Imprägniermittel also auch andere Polymerteilchen, welche nicht Acrylate bzw. polymere Acrylate enthalten, umfassen. Derartige Nichtacrylatpolymere können beispielsweise Butadien- und/oder Styrol-haltige Polymere sein, insbesondere Polybutadien und/oder Polystyrol. Es versteht sich, dass an Stelle von Butadien allgemein in Bezug auf die genannten Polymere (also insbesondere auch Coplymere und/oder Blends mit anderen Polymeren) auch andere ungesättigte C-C-Bindungen (insbesondere im Grundgerüst) enthaltende Polymere, insbesondere Kautschuke oder Kautschuk-Copolymeranteile, enthalten sein können. Relativ oder zusätzlich kann das Imprägniermittel auch Polyurethan- und/ oder Polyether-Verbindungen enthalten, gegebenenfalls in Kombination mit Butadien-haltigen Polymeren oder alternativ oder in Kombination mit Styrol-haltigen Polymeren oder mit PVA (Polyvinylacetat).

Nach einer bevorzugten Ausführungsform umfasst das Imprägniermittel Polymerteilchen, welche vollständig aus einem Polyacrylat/Polymethacrylat bestehen, gegebenenfalls in Kombination mit Polymerteilchen anderer Zusammensetzung. Das reine Polyacrylat kann hierbei ≥ 20-30 Gew.-% oder ≥ 40-60 Gew.-%, vorzugsweise ≥ 75-85 Gew.-%, besonders bevorzugt ≥ 90-95 Gew.-% oder zumindest ungefähr 100 Gew.-% der polymeren Bestandteile des Imprägniermittels ausmachen.

Als Acrylat wird nach diesem Ausführungsbeispiel ein Acrylatpolymer eingesetzt, derart, dass das Imprägniermittel < 5 Gew.-% an dispergierten Polymerteilchen aufweist, welche kein Acrylat enthalten. Im speziellen ist das eingesetzte Acrylat ein Acrylat-Copolymer, genauer gesagt ein Acrylat-Butadien-Copolymer. Der Butadiengehalt des Copolymers kann 10-50 Gew.-% bezogen auf das Polymer betragen, beispielsweise ca. 15 Gew.-%. Bewährt haben sich aber auch reine Acrylat-Polymere, also ohne Copolymer-Bestandteile. Das eingesetzte Acrylatpolymer weist ≤ 5 Gew.-% oder nach einer besonderen Abwandlung praktisch keine ionischen Polymeren auf.

Nach einer Abwandlung dieses Ausführungsbeispiels kann als Imprägniermittel ein Acrylat-Polymer (auch Acrylat-Copolymer) eingesetzt werden, wobei weitere dispergiert Polymerteilchen vorliegen, welche nicht ein Acrylat-Polymer aufweisen. Diese Teilchen können beispielsweise dispergierte Kautschukpartikel, beispielsweise Polybutadienpartikel sein.

Das nach diesem Ausführungsbeispiel und dessen Abwandlungen eingesetzte Acrylat-Polymer hat eine Glasübergangstemperatur von -55°C. Das Acrylat-Copolymer weist nach dem Ausführungsbeispiel einen Polymerisationsgrad im Bereich von 1.000-50.000 Monomereneinheiten auf, beispielsweise ca. 20.000 Monomereneinheiten.

Die Ausführungen zu dem einsetzbaren Acrylat beziehen sich insbesondere auf solche, welche zumindest teilweise aus nachwachsenden Rohstoffen bestehen, beispielsweise mit Alkyl-, insbesondere Butyl-, Seitengruppen aus nachwachsenden Rohstoffen, sie können sich aber auch explizit auf Acrylate beziehen, welche nicht (zumindest teilweise) aus nachwachsenden Rohstoffen bestehen und in Kombination mit anderen Haftmitteln aus nachwachsenden Rohstoffen eingesetzt werden.

Als besonders bevorzugt hat es sich erwiesen, wenn das Imprägniermittel (bezogen auf die Polymeranteile desselben) in Bezug auf das Gewicht des Schaumstoffmaterials in einem Anteil von 20-275% oder 20-275% eingesetzt wird, vorzugsweise im Bereich von 5-200% oder 25-200% oder 5-150% oder 35-150%, besonders bevorzugt im Bereich von 50-150% oder 75-125% oder im speziellen im Bereich von 5-100% oder 5-75%. In besonderen Anwendungsfällen kann das Verhältnis der Polymeranteile des Imprägnats zu dem Gewicht des Schaumstoffmaterials im Bereich von 2-100% oder 3-75% oder 5-50% liegen. Dies bezieht sich jeweils auf das einsatzfähige Dichtband, welches also bevorzugt in getrocknetem Zustand vorliegt. Es hat sich herausgestellt, dass bei Einsatz des Imprägniermittel mit einem derartigen Gewichtsverhältnis das Dichtband auch bei Verwendung von relativ geschlossenzelligen Schaumstoffmaterialien mit nur geringer Luftdurchlässigkeit einerseits fertigungstechnisch noch gut herstellbar ist, andererseits auch bei den im Rahmen der Erfindung eingesetzten Schaumstoffen eine den jeweiligen Erfordernissen angepasste Rückstellung erzielbar ist, insbesondere bevorzugt eine nicht zu schnelle Rückstellung, welche eine günstige Handhabung des Dichtbandes ermöglicht. Dies gilt insbesondere für die im Rahmen der Erfindung beanspruchten Luftdurchlässigkeiten des Schaumstoffmaterials. Niedrige Polymeranteile ermöglichen höhere Anteile an anderen Komponenten aus nachwachsenden Rohstoffen, insbesondere Baumharzsäuren und/oder Baumharzester, und damit ein ökologische Ausrichtung des Dichtbandes und Erhöung des Spielraumes der Eigenschaftsanpassung des Dichtbandes.Das Gewichtsverhältnis an Baumharzsäuren und deren Derivaten, insbesondere Baumharzsäuren und Baumharzester, zu polymeren Bestandteilen des Imprägniermittels kann im Bereich von 20:1 bis 1:20 oder 12:1 bis 1:12 liegen, bspw. im Bereich von 12:1 bis 1:5 oder im Bereich von 6:1 bis 1:2 oder 6:1 bis 1:1, wobei allgemein die Komponenten aus nachwachsenden Rohstoffen in einem höheren Gew.-Anteil als die polymeren Bestandteile vorliegen können, auch in Bezug auf obige Verhältnisse. Die obigen Angaben können sich jeweils insbesondere auch auf das Verhältnis von nachwachsenden Rohstoffen und deren Derivate, insbesondere in Form von Estern, zu polymeren Bestandteilen nicht-nachwachsender Rohstoffe beziehen. Insbesondere kann sich dies jeweils auf Kolophoniumharzsäuren und deren Derivate, insbesondere in Form von Estern beziehen, oder in Bezug auf Kolophoniumharzsäuren oder Kolophoniumharzsäureester. Im speziellen können Baumharzsäuren und/oder Baumharzester, insbesondere Kolophoniumharzsäuren und/oder Kolophoniumharzester, zu polymeren Bestandteilen des Imprägniermittels mit einem Gewichtsverhältnis im Bereich von 20:1 bis 1:20 oder 12:1 bis 1:12 liegen, bspw. im Bereich von 12:1 bis 1:5 oder im Bereich von 6:1 bis 1:2 oder 6:1 bis 1:1. Hierdurch sind insgesamt hohe Gehalte der nachwachsenden Rohstoffe bei zugleich sehr guten Hafteigenschaften und UV-Beständigkeit des Imprägnats gegeben. Die polymeren Bestandteile sind hier vorzugsweise solche nicht aus nachwachsenden Rohstoffen. Allgemein können die polymeren Bestandteile hier Acrylate sein.

Als besonders bevorzugt hat es sich erwiesen, wenn die nachwachsenden Rohstoffe des Imprägniermittels und deren Derivate in Bezug auf das Gewicht des Schaumstoffmaterials in einem Anteil von 10-300% oder 20-275% eingesetzt wird, vorzugsweise im Bereich von 25-200% oder 35-150%, besonders bevorzugt im Bereich von 50-150%. Dies bezieht sich jeweils auf das einsatzfähige Dichtband, welches also bevorzugt in getrocknetem Zustand vorliegt. Die obigen Angaben können sich jeweils insbesondere auch auf das Verhältnis von Baumharzsäuren und deren Derivate, insbesondere in Form von Estern, zum Schaumstoffmaterial beziehen, insbesondere auf das Verhältnis von Baumharzsäuren oder das Verhältnis von Baumharzsäureestern zum Schaumstoffmaterial. Insbesondere kann sich dies jeweils auf das Verhältnis von Kolophoniumharzsäuren und deren Derivate, insbesondere in Form von Estern, zum Schaumstoffmaterial beziehen, oder im speziellen in Bezug auf Kolophoniumharzsäuren oder Kolophoniumharzsäureester zu diesem.

Der Schaumstoff des Dichtbandes (ohne Imgrägnat) kann ein Raumgewicht von 20-55 Kg/m³ aufweisen, bspw. im Bereich von 25-45 Kg/m³ oder 25-35 Kg/m³, ohne hierauf beschränkt zu sein.

Der Imprägniermittelfilm des Dichtbandes kann eine Schichtdicke von ≥ 1,5-3 µm wie ≥ 5-10 µm oder ≥ 15 µm aufweisen, die Schichtdicke kann ≤ 125-150 µm oder ≤ 75-100 µm oder ≤ 40-60 µm betragen. Vorzugsweise liegt die Schichtdicke des Imprägniermittelfilmes im Bereich von 5-150 µm oder 10-100 µm, besonders bevorzugt im Bereich von 15-50 µm, bspw. bei ca. 30 µm.

Weiterhin können Füllstoffe wie Flammschutzmittel, Mittel zur Einstellung der Wärmeleitfähigkeit des Dichtbandes etc, vorzugsweise mineralische Füllstoffe einschließlich Graphit, in Bezug auf das Gewicht des Schaumstoffmaterials in einem Anteil von 25-500% (d.h. in Bezug auf 100% als Gewicht des reinen Schaumstoffmaterials ohne polymeren Imprägniermittel etc) eingesetzt werden, vorzugsweise im Bereich von 30-375% oder 50-350% oder 70-250%, besonders bevorzugt im Bereich von 75-200% desselben. Es hat sich herausgestellt, dass hierdurch das Rückstellverhalten des Dichtbandes trotz der ansonsten für dieses nicht förderlichen Füllstoffe, immer noch im Wesentlichen durch das Imprägniermittel bestimmt und nicht übermäßig beeinträchtigt wird.

Vorzugsweise ist das Dichtband mit dem Imrägnat bzw. dem Haftmittel homogen imprägniert, auch mit homogener Verteilung des nachwachsenden Rohstoffes im Dichtband. Das Dichtband kann aber auch inhomogen wie bspw. nur bereichsweise oder mit Zonen unterschiedlich starker Imprägnierung imprägniert sein.

Die Erfindung wird nachfolgend beispielhaft beschrieben und anhand der Ausführungsbeispiele beispielhaft erläutert.

Die Erfindung betrifft ein Fugendichtband mit einem Korpus aus einem Schaumstoffmaterial, welches mit einem Imprägnat zur verzögerten Rückstellung imprägniert ist.

Das Schaumstoffmaterial besteht nach dem ersten Ausführungsbeispiel (und gegebenenfalls den weiteren Beispielen) insbesondere aus einem Polyurethanschaumstoff. Das Schaumstoffmaterial weist nach einer Ausführungsform eine Luftdurchlässigkeit von 100 bis 250 l/m²s unter den eingangs angegebenen Prüfbedingungen auf, sie kann aber auch bis 600 l/m²s betragen.

Das Imprägnat ist ein solches auf Wasserbasis, in welchem das Haftmittel dispergiert vorliegt, gegebenenfalls auch zumindest teilweise gelöst. Das Imprägnat weist als weitere fakultative Bestandteile Flammschutzmittel, insbesondere in Form von Intumeszenzmitteln (oder Aluminiumhydroxid), und weitere Hilfsstoffe auf, insbesondere Dispergiermittel, gegebenenfalls zusätzlich auch Farbstoffe oder dergleichen. In einer besonderen Ausführungsform weist das Imprägnat zusätzlich auch Füllstoffe in Form von mineralischen Bestandteilen wie Kalziumcarbonat oder Quarzsand auf, wodurch insbesondere die schalldämmenden Eigenschaften des Dichtbandes eingestellt werden können.

Das Imprägnat weist ein aus nachwachsenden Rohstoffen hergestelltes Haftmittel auf, im Speziellen ein Derivat eines aus einem nachwachsenden Rohstoff erhaltenen Haftmittels. Als Haftmittelkomponente ist hier im speziellen ein Baumharzsäurederivat vorgesehen, genauer gesagt ein Baumharzsäureester, genauer gesagt ein Kolophoniumharzsäureester. Der Ester wurde nach dem Ausführungsbeispiel durch Disproportionierung der zweifach ungesättigten Baumharzsäure und anschließende Veresterung mit einem Alkohol, im speziellen einem mehrwertigen Alkohol wie Glycerin erhalten. Hauptbestandteil der eingesetzten Harzsäuren ist Abietinsäure und/oder Pimarsäure. Gegebenenfalls kann auch unmittelbar ein Abietin- und/oder Pimarsäureester eingesetzt werden. Alternativ oder zusätzlich können beispielsweise auch Ester teilweise oder vollständig hydrierter Abietin- und/oder Pimarsäure eingesetzt werden. Nach einer weiteren Abwandlung können allgemein Kolophoniumharzsäureester eingesetzt werden bzw. Ester von Kolophoniumharzsäurederivaten. Die Derivatisierung erfolgt jeweils nach einer besonders bevorzugten Variante durch eine Disproportionierungs-, Hydrierungs- und/oder Dehydrierungsreaktion, insbesondere Disproportionierung. Beispielsweise folgende Alkohole können zur Veresterung der Baumharzsäuren, insbesondere Kolophoniumharzsäuren eingesetzt werden: Ethanol, Propanol, Butanol, Pentanol, Hexanol, mehrwertige Alkohole wie Glycol, Glycerin, Pentaerythritol, Alkoholether, insbesondere Alkohole mit PEG-Endgruppen, insbesondere PEG 2-30, vorzugsweise 2-20, beispielsweise 4-10.

Als weitere Komponente weist das Haftmittel nach dem ersten Ausführungsbeispiel ein organisches Polymer, insbesondere auf Basis eines Polyacrylats oder styrolhaltigen Kautschuks, insbesondere SBR auf.

Nach einem Ausführungsbeispiel weist das Imprägnat folgende Zusammensetzung auf und liegt in Form einer wässrigen Dispersion vor (Gehalte bezogen auf die nicht wässrigen Bestandteile des Imprägnats):
Baumharzester (z.B. Kolophoniumester, insbes. Abietin- und/oder Pimarsäureester) als Haftmittelkomponente: 40 Gew.-%
polymere Haftmittel (Polyacrylat): 20 Gew.-%
weitere Bestandteile:
   Flammschutzmittel / mineralische Bestandteile: 30 Gew.-% Hilfsstoffe wie Dispergiermittel usw.: 10 Gew.-%

Der Feststoffgehalt des Imprägnats beträgt ca. 40 Gew.-%. Das Verhältnis Baumharzester / Polymer (insbesondere Polyacrylat) beträgt nach dem Ausführungsbeispiel 2:1.

Abietin- und Pimarsäureester können in dem Verhältnis vorliegen, wie Abietinaäure und Pimarsäure in natürlichen Quellen, insbesondere Konfiferen wie Kiefern, Fichten, Tannen, was allgemein im Rahmen der Erfindung gelten kann. Als Alkohol zur Veresterung wurde ein einwertiger oder mehrwertiger C1-C12 Alkohol eingesetzt, beispielsweise Glykol.

Nach einem zweiten Ausführungsbeispiel sind ausgehend vom dem ersten Ausführungsbeispiel die Baumharzester teilweise oder vollständig durch Terpenharze und/oder Polyterpenalkoholate ersetzt. Insbesondere sind Polyterpenphenolate einsetzbar, wobei der Phenolring Substituenten in Form von Kohlenwasserstoffgruppen, einschließlich zyklische Gruppen, Hydroxygruppen und/oder Ethergruppen aufweisen kann.

Nach einer ersten Abwandlung sind 50% der Kolophoniumharzester durch Polyterpenalkoholate, insbesondere Polyterpenphenolat, ersetzt.

Nach einer weiteren Abwandlung sind 80% der Baumharzester des Ausführungsbeispiels 1 durch Polyterpenalkoholate, insbesondere Polyterpenphenolat, ersetzt.

Nach einer weiteren Abwandlung sind die Kolophoniumharzsäureester vollständig durch Polyterpenalkoholate ersetzt.

Es wurden jeweils Polyterpene mit einem Polymerisierungsgrad eingesetzt, so dass bei 20°C eine vollständige Rückstellung des Dichtbandes unter den genannten Bedingungen in ca. 5 Stunden erfolgte (bei Kompression auf 15% des Volumens gegenüber dem Volumen bei maximaler Rückstellung).

Das erfindungsgemäße Dichtband zeichnet sich dadurch aus, dieses auch bei erhöhter Temperatur (z.B. 50°C) und erhöhtem Druck (z.B. bei einer Kompression auf ca. 7 % dessen Volumens bei vollständiger freier Rückstellung) eine hohe Lebensdauer aufweist. Es wird unter diesen Bedingungen, wie sie sich bei temperaturbedingten Bauteilverschiebungen im Fugenbereich ohne weiteres ergeben können, praktisch kein Fließen des Imprägniermittelfilmes beobachtet, welcher sich bspw. durch Ansammlung von Imprägniermittel an den nicht druckbelasteten Dichtbandflächen bemerkbar machen kann. Dies kann bspw. durch entsprechende Versuche im Trockenschrank simuliert werden, wobei bei erfindungsgemäßen Dichtbändern auch nach 1-2 Stunden oder auch nach 5-10 Stunden oder darüber hinaus, bspw. nach 24 oder 48 Stunden keine Veränderung bzw. kein Ausbluten zu beobachten ist, wobei durch Imprägnierung mit Acrylatlösungen hergestellte Dichtbänder ein deutlich instabileres Verhalten zeigen.

Das erfindungsgemäße Haftmittel auf Basis von Baumharzsäuren, insbesondere Baumharzsäureestern, zeichnet sich dadurch aus, dass dieses bei tiefen Temperaturen eine höhere Zugfestigkeit aufweist, als Polyacryl-Haftmittel. So weist ein Haftmittelfilm erzeugt aus Baumharzestern, insbesondere Kolophoniumharzsäureestern, im Speziellen Ester von hydrierter Abietinsäure, bei 0°C eine Zugfestigkeit von 1,1 bis 1,5 N/mm² auf und eine Reißdehnung von 3-5%. Der Haftmittelfilm wurde erzeugt durch die Beschichtung eines Substrats mit einer wässrigen Haftmitteldispersion und Trocknung des Filmes bei 50°C, 10% relativer Luftfeuchtigkeit bis zur Gewichtskonstanz. Die Prüfung erfolgte in Anlehnung an DIN EN ISO 1798 bei Normklima an vorgekühlten Proben (0°C / 24 Stunden) und einer Prüfgeschwindigkeit von 500 mm/min.

Ein unter gleichen Bedingungen hergestellter und geprüfter Haftmittelfilm aus Polyacrylat weist eine Zugfestigkeit von ca. 0,45 N/mm² auf sowie eine Reißdehnung von ca. 2.000%. Durch das erfindungsgemäße Haftmittel kann somit das Rückstellverhalten des Dichtungsbandes bei niedrigen Temperaturen eingestellt werden.

Nach einem dritten Ausführungsbeispiel wird ausgehend von dem Ausführungsbeispiel 1 ein Imprägnat eingesetzt, bei welchem das Polyacrylat ein Polyacrylbutylsäureester ist (ggf. auch mehrere in Kombination), wobei 50% der Butylgruppen durch nachwachsende Rohstoffe erhalten sind. Das Butanol ist durch an sich bekannte Weise durch Fermentation erhalten, z.B. durch Fermentation von Zucker und Stärke mittels Mikroorganismen wie beispielsweise Clostridium acetobutylicum.

Nach einer Abwandlung sind 100% des Polyacrylats Polybutylacrylat, wobei 100% der Butylgruppen aus nachwachsenden Rohstoffen erhalten sind, wie oben beschrieben.

Gemäß weiteren Ausführungsbeispielen können anstelle der Baumharzsäureester bzw. Kolophoniumsäureester jeweils alternativ die entsprechenden Baumharzsäuren bzw. Kolophoniumsäuren eingesetzt werden.

## Patentansprüche

1. Fugendichtband mit einem Korpus aus einem Schaumstoffmaterial, welches mit einem Imprägnat zur verzögerten Rückstellung imprägniert ist, **dadurch gekennzeichnet, dass** das Imprägnat zumindest teilweise aus einem nachwachsenden Rohstoff einschließlich dessen Derivaten besteht.

2. Dichtband nach Anspruch 1, **dadurch gekennzeichnet, dass** das Imprägnat ein Haftmittel und gegebenenfalls Füllstoffe umfasst, und dass das Haftmittel zumindest teilweise aus einem nachwachsenden Rohstoff einschließlich dessen Derivaten besteht.

3. Dichtband nach Anspruch 1 oder 2, **dadurch gekennzeichnet, dass** das Imprägnat oder das Haftmittel desselben eine oder mehrere Komponenten ausgewählt aus der Gruppe der Baumharze und Terpene einschließlich jeweils deren Derivate umfasst.

4. Dichtband nach Anspruch 3, **dadurch gekennzeichnet, dass** das Imprägnat oder das Haftmittel desselben mindestens eine Kolophoniumharzsäure und/oder deren Derivate umfasst.

5. Dichtband nach einem der Ansprüche 1-4, **dadurch gekennzeichnet, dass** das Imprägnat oder das Haftmittel desselben Baumharzsäureester oder Kolophoniumharzsäureester umfasst.

6. Dichtband nach einem der Ansprüche 1-5, **dadurch gekennzeichnet, dass** das Imprägnat oder das Haftmittel desselben Baumharzsäureester eines ein- oder mehrwertigen Alkohols und/oder von Alkohol-Ether-Verbindungen umfasst.

7. Dichtband nach einem der Ansprüche 1-6, **dadurch gekennzeichnet, dass** das Derivat des nachwachsenden Rohstoffes, insbesondere Baumharzderivat, aus dem nachwachsenden Rohstoff erhalten ist durch einen oder mehrere Schritte aus der Gruppe Disproportionierung, Dimerisierung, Polymerisierung, Hydrierung, Addition gesättigter oder ungesättigter Verbindungen, Veresterung, Umesterung, Amidisierung, Salzbildung und/oder dass das Derivat des nachwachsenden Rohstoffes aus dem nachwachsenden Rohstoff erhalten ist durch einen oder mehrere Schritte einer enzymatischen oder bakteriellen Spaltung, einschließlich Gärungs- oder Fermantationsprozesse.

8. Dichtband nach einem der Ansprüche 1-7, **dadurch gekennzeichnet, dass** das Imprägnat als Haftmittel ein Polymer mit funktionellen Seitengruppen enthält und dass die Polymerseitengruppen aus einem nachwachsenden Rohstoff hergestellt sind.

9. Dichtband nach Anspruch 8, **dadurch gekennzeichnet, dass** die Seitengruppen Alkoholatgruppen sind.

10. Dichtband nach Anspruch 8 oder 9, **dadurch gekennzeichnet, dass** das Polymer ein Acrylat und/oder Methacrylat ist oder als Coplymer Acrylat- und/oder Methacrylat-Bausteine enthält.

11. Dichtband nach einem der Ansprüche 1-10, **dadurch gekennzeichnet, dass** das Imprägnat bezogen auf dessen Trockengewicht an organischen Bestandteilen zu mehr als 20 Gew.-% aus nachwachsenden Bestandteilen oder deren Derivaten besteht.

12. Dichtband nach einem der Ansprüche 1-11, **dadurch gekennzeichnet, dass** das Haftmittel des Imprägnats bezogen auf das Haftmittel-Trockengewicht an organischen Bestandteilen zu mehr als 20 Gew.-% aus nachwachsenden Bestandteilen oder deren Derivaten besteht.

13. Dichtband nach einem der Ansprüche 1-12, **dadurch gekennzeichnet, dass** das Imprägnat bezogen auf dessen Trockengewicht einen Anteil von ≥ 15 Gew.-% an Haftmittel aufweist.

14. Dichtband nach einem der Ansprüche 1-13, **dadurch gekennzeichnet, dass** ≥ 10 Gew.-% des Imprägnats bezogen auf dessen Trockengewicht organische Polymere und/oder Baumharze, Terpene und deren Derivate sind.

15. Dichtband nach einem der Ansprüche 1-14 **dadurch gekennzeichnet, dass** das Imprägnat auf dem Schaumstoff im getrockneten Zustand mit einer Schichtdicke von 5-150 µm aufgebracht ist.

16. Dichtband nach einem der Ansprüche 1-15, **dadurch gekennzeichnet, dass** das Haftmittel eine Zugfestigkeit von ≥ 0,1 N/mm² und/oder ≤ 4 N/mm² bei 0°C aufweist.

17. Bauwerk mit zwei Bauteilen und zwischen diesen ausgebildeter Fuge, in welcher ein komprimiertes Dichtungsband eingebracht ist, **dadurch gekennzeichnet, dass** das Dichtungsband ein solches nach einem der Ansprüche 1 bis 16 ist.
